# EUROPEAN PATENT APPLICATION

(11) **EP 4 776 130 A1**
(43) Date of publication of application: **15.07.2026**
(21) Application number: 24925156.2
(22) Date of filing: 16.08.2024
(51) Int. Cl.: G06F 9/50

(54) **ASYNCHRONOUS DEPLOYMENT METHOD FOR COMPUTING TASK OF HARDWARE ACCELERATION UNIT, AND HETEROGENEOUS COMPUTING TERMINAL, APPARATUS, MEDIUM, AND PROGRAM PRODUCT**

(71) Applicant: Verisilicon Microelectronics (Hainan) Co., Ltd., Haikou, Hainan 570208 (CN); VeriSilicon Microelectronics (Shanghai) Co., Ltd., Shanghai 201203 (CN); VeriSilicon Microelectronics (Chengdu) Co., Ltd., Chengdu, Sichuan 610041 (CN)
(72) Inventor: WANG, Haotin, Chengdu, Sichuan 610041 (CN)
(74) Representative: Canzler & Bergmeier Patentanwälte Partnerschaft mbB
(86) International application number: PCT/CN2024/112647
(87) International publication number: WO 2026/036371

(57) **Abstract**

The present disclosure provides an asynchronous deployment method for computation tasks of a hardware acceleration unit, heterogeneous computing terminal, device, medium, and program product. By asynchronously deploying computation tasks to the hardware acceleration unit, the task deployment of the control unit and the task execution of the hardware acceleration unit can proceed in parallel, avoiding the need for mutual waiting, and thereby improving the system's resource utilization, throughput, and computational efficiency. In addition, the hardware acceleration unit can automatically jump to the next computation task, further improving the utilization of the hardware acceleration unit. This method not only reduces the system's waiting time but also shortens the system's response time, enhances stability, and improves adaptability, better meeting the needs of various computing scenarios and task requirements.

## Description

### Background of the Present Disclosure

### FIELD OF THE DISCLOSURE

The present disclosure relates to the technical field of electro-digital data processing, and in particular, to an asynchronous deployment method for computation tasks of a hardware acceleration unit, heterogeneous computing terminal, device, media, and program product.

### DESCRIPTION OF RELATED ARTS

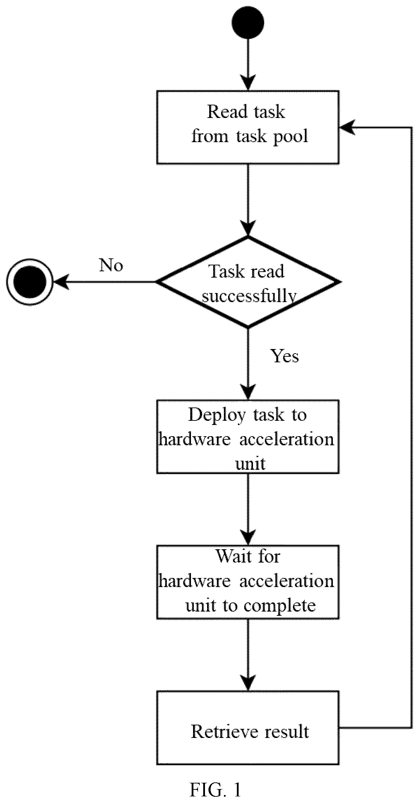

The deployment of a hardware acceleration unit refers to a process of assigning specific algorithms or computation tasks to designated hardware devices, enabling these tasks to run on the devices for inference or computation. The synchronous deployment method involves synchronization between the hardware acceleration unit and the control unit. In this method, the hardware acceleration unit remains blocked until the control unit assigns a task. Once the hardware acceleration unit completes the task, the control unit can then deploy the next task. FIG. 1 illustrates a schematic flow diagram of a deployment method in the prior art. When there are multiple tasks in the task pool, the system reads a task from the pool based on attributes such as task priority and deploys it to the hardware acceleration unit according to the task description. Once the hardware acceleration unit begins executing the task, the control unit waits for the hardware acceleration unit to complete the execution. It then retrieves the task results and performs subsequent processing. The above steps are repeated until the task pool is empty.

The existing deployment method has several shortcomings. For example, since the control unit submits a task to the hardware acceleration unit, the operations of the control unit and the hardware acceleration unit are synchronized, resulting in waiting between the two. Specifically, the hardware acceleration unit has to wait for the control unit to deploy a task to start execution, while the control unit has to wait for the hardware acceleration unit until its execution is completed, so as to read the results and deploy the next task. After the hardware acceleration unit completes the current task, the control unit must participate in scheduling the next task, and during this task scheduling by the control unit, the hardware acceleration unit remains idle, leading to reduced utilization of the hardware acceleration unit. Moreover, after the hardware acceleration unit completes a task, it still remains idle during the process in which the control unit detects the task completion, reads the results, and performs subsequent processing. This mutual waiting and scheduling delay result in a significant waste of the hardware resources of the hardware acceleration unit, especially under heavy task loads.

### SUMMARY OF THE PRESENT DISCLOSURE

The present disclosure provides an asynchronous deployment method for computation tasks of a hardware acceleration unit, a heterogeneous computing terminal, a device, a medium, and a program product. The problem of mutual waiting between a control unit and a hardware acceleration unit in the existing synchronous deployment method, which causes the hardware acceleration unit to be in an idle state, is avoided, thus increasing the utilization rate of the hardware acceleration unit and realizing a full use of hardware resources.

In a first aspect, the present disclosure provides an asynchronous deployment method for computation tasks of a hardware acceleration unit, comprising: reading a first computation task from a task pool, deploying the first computation task to the hardware acceleration unit using a standard deployment method for the hardware acceleration unit to perform a corresponding computation operation on the first computation task, and writing a first identification information of the first computation task into a waiting queue; then concurrently executing the following:

reading a second computation task from the task pool as a current computation task, asynchronously deploying the second computation task to the hardware acceleration unit for the hardware acceleration unit to perform a corresponding computation operation on the second computation task, and writing a second identification information of the second computation task into the waiting queue; continuing to read a third computation task, deploy the third computation task to the hardware acceleration unit, and write a third identification information of the third computation task into the waiting queue, until the task pool is empty;

reading an identification information from the waiting queue as a current identification information, detecting whether an interrupt signal corresponding to the current identification information is received from the hardware acceleration unit; if the interrupt signal corresponding to the current identification information is received, retrieving a computing result of a corresponding computation task based on the current identification information, and continuing to read a next identification information, detect whether an interrupt signal corresponding to the next identification information is received, and retrieve a computing result of a corresponding computation task based on the next identification information, until the waiting queue is empty; if no interrupt signal is received, continuing to wait until the interrupt signal corresponding to the current identification information is received from the hardware acceleration unit.

In some embodiments of the first aspect of the present disclosure, the method further comprises: after asynchronously deploying the second computation task to the hardware acceleration unit, inserting a jump instruction at the end of an instruction of the first computation task, wherein a target address of the jump instruction is a starting address of the second computation task, so that after the hardware acceleration unit completes the first computation task, it automatically jumps to and executes the second computation task.

In some embodiments of the first aspect of the present disclosure, each computation task comprises: an operation type, operation data, and a control instruction.

The control instruction comprises an operation execution instruction, which instructs the hardware acceleration unit to perform a corresponding computation operation for a current computation task; a task completion instruction, which instructs the hardware acceleration unit to send a task completion signal to the control unit indicating that the current computation task has been completed; and a jump instruction, which instructs the hardware acceleration unit, after completing the current computation task, to jump directly to and execute a next computation task that has been asynchronously deployed.

In some embodiments of the first aspect of the present disclosure, the hardware acceleration unit comprises multiple cores, and asynchronously deploying the second computation task to the hardware acceleration unit for the hardware acceleration unit to perform a corresponding computation operation on the second computation task comprises: determining whether one or more cores used for deploying the second computation task are idle by the control unit; if all of the cores are idle, the control unit deploys the second computation task to the hardware acceleration unit using the standard deployment method; otherwise, the control unit asynchronously deploys the second computation task to the hardware acceleration unit.

In some embodiments of the first aspect of the present disclosure, the computation task refers to computation tasks with different computation data but the same computation type.

In some embodiments of the first aspect of the present disclosure, asynchronously deploying multiple computation tasks with different computation data but the same computation type comprises:

deploying the first computation task to the hardware acceleration unit using the standard deployment method to perform the corresponding computation operation;

after detecting that the hardware acceleration unit has completed the execution of an input/output related instruction of the first computation task, altering an input data of the first computation task, and generating the second computation task, which is then asynchronously deployed to the hardware acceleration unit for performing the corresponding computation operation; continuing to alter an input data of the second computation task, and perform the corresponding computation operation until a preset termination condition is met, after detecting that the hardware acceleration unit has completed the execution of an input/output related instruction of the second computation task.

In some embodiments of the first aspect of the present disclosure, the preset termination condition comprises one or more of the following:
terminating the operation after a preset number of input data alterations for the first computation task;
terminating the operation when a total duration of the computation operation executed by the hardware acceleration unit reaches a preset duration;
terminating the operation when computation resources of the hardware acceleration unit fall below a preset standard.

In some embodiments of the first aspect of the present disclosure, when the second computation task is the last in the waiting queue, a last instruction of the second computation task is a termination instruction.

In some embodiments of the first aspect of the present disclosure, the identification information comprises a memory address, and retrieving the computation result of the corresponding computation task based on the current identification information comprises:
reading the computation result from a current memory address in a memory.

In a second aspect, the present disclosure provides a heterogeneous computing terminal, comprising a control unit and a hardware acceleration unit. The control unit and the hardware acceleration unit have the following interaction process:
the control unit reads a first computation task from a task pool, deploys the first computation task to the hardware acceleration unit using a standard deployment method for the hardware acceleration unit to perform a corresponding computation operation on the first computation task, and writes a first identification information into a waiting queue; then, the following are executed concurrently:
the control unit reads a second computation task from the task pool as a current computation task, asynchronously deploys the second computation task to the hardware acceleration unit for the hardware acceleration unit to perform a corresponding computation operation on the second computation task, and writes a second identification information of the second computation task into the waiting queue;
the control unit continues to read a third computation task, deploys the third computation task to the hardware acceleration unit, and writes a third identification information of the third computation task into the waiting queue, until the task pool is empty;
the control unit reads an identification information from the waiting queue as a current identification information, and detects whether an interrupt signal corresponding to the current identification information is received from the hardware acceleration unit; if the control unit receives the interrupt signal, it retrieves a computation result corresponding to a computation task based on the current identification information, and continues to read a next identification information, detect whether an interrupt signal corresponding to the next identification information is received, and retrieve a computation result of a corresponding computation task based on the next identification information, until the waiting queue is empty;
if the control unit does not receive the interrupt signal corresponding to the current identification information, it continues to wait until the interrupt signal corresponding to the current identification information is received from the hardware acceleration unit.

In some embodiments of the second aspect of the present disclosure, each computation task comprises: an operation type, operation data, and a control instruction. The control instruction comprises an operation execution instruction, which instructs the hardware acceleration unit to perform a corresponding computation operation for a current computation task; a task completion instruction, which instructs the hardware acceleration unit to send a task completion signal to the control unit indicating that the current computation task has been completed; and a jump instruction, which instructs the hardware acceleration unit, after completing the current computation task, to jump directly to and execute a next computation task that has been asynchronously deployed.

In some embodiments of the second aspect of the present disclosure, the interaction process further comprises:
after the control unit asynchronously deploys the second computation task to the hardware acceleration unit, inserting a jump instruction at the end of an instruction of the first computation task, wherein a target address of the jump instruction is a starting address of the second computation task, so that after the hardware acceleration unit completes the first computation task, it automatically jumps to and executes the second computation task.

In some embodiments of the second aspect of the present disclosure, the hardware acceleration unit comprises multiple cores, and the control unit asynchronously deploys the second computation task to the hardware acceleration unit for the hardware acceleration unit to perform a corresponding computation operation on the second computation task comprises:
determining whether one or more cores used for deploying the second computation task are idle by the control unit;
if all of the cores are idle, the control unit deploys the second computation task to the hardware acceleration unit using the standard deployment method;
otherwise, the control unit asynchronously deploys the second computation task to the hardware acceleration unit.

In some embodiments of the second aspect of the present disclosure, the computation task refers to computation tasks with different computation data but the same computation type.

In some embodiments of the second aspect of the present disclosure, asynchronously deploying multiple computation tasks with different computation data but the same computation type comprises:
deploying the first computation task to the hardware acceleration unit using the standard deployment method to perform the corresponding computation operation;
after detecting that the hardware acceleration unit has completed the execution of an input/output related instruction of the first computation task, altering an input data of the first computation task, and generating the second computation task, which is then asynchronously deployed to the hardware acceleration unit for performing the corresponding computation operation;
continuing to alter an input data of the second computation task, and perform the corresponding computation operation until a preset termination condition is met, after detecting that the hardware acceleration unit has completed the execution of an input/output related instruction of the second computation task.

In some embodiments of the second aspect of the present disclosure, the preset termination condition comprises one or more of the following:
terminating the operation after a preset number of input data alterations for the first computation task;
terminating the operation when a total duration of the computation operation executed by the hardware acceleration unit reaches a preset duration;
terminating the operation when computation resources of the hardware acceleration unit fall below a preset standard.

In some embodiments of the second aspect of the present disclosure, when the second computation task is the last in the waiting queue, a last instruction of the second computation task is a termination instruction.

In some embodiments of the second aspect of the present disclosure, the identification information comprises a memory address, and the control unit retrieving the computation result of the corresponding computation task based on the current identification information comprises:
reading the computation result from a current memory address in a memory.

In a third aspect, the present disclosure provides an asynchronous deployment device for computation tasks of a hardware acceleration unit, comprising: a task acquisition module: for reading a first computation task from a task pool and deploying the first computation task to the hardware acceleration unit using a standard deployment method for the hardware acceleration unit to perform a corresponding computation operation on the first computation task and write a first identification information of the first computation task into a waiting queue;
a task deployment module: for reading a second computation task from the task pool as a current computing task, asynchronously deploying the second computation task to the hardware acceleration unit for the hardware acceleration unit to perform a corresponding computation operation on the second computation task, and writing a second identification information of the second computation task into the waiting queue; continuing to read a third computation task, deploy the third computation task to the hardware acceleration unit, and write a third identification information of the third computation task into the waiting queue until the task pool is empty;
and a result waiting module: for reading an identification information from the waiting queue as a current identification information, detecting whether an interrupt signal corresponding to the current identification information is received from the hardware acceleration unit; if the interrupt signal corresponding to the current identification information is received, retrieving a computation result of a corresponding computation task based on the current identification information, and continuing to read a next identification information, detect whether an interrupt signal corresponding to the next identification information is received from the hardware acceleration unit, and retrieve a computation result of a corresponding computation task based on the next identification information, until the waiting queue is empty; if the interrupt signal corresponding to the current identification information is not received, continuing to wait until the interrupt signal corresponding to the current identification information is received from the hardware acceleration unit.

In a fourth aspect, the present disclosure provides a computer-readable storage medium, wherein the computer-readable storage medium stores a computer program, and when the computer program is executed by a processor, the asynchronous deployment method for computation tasks of the hardware acceleration unit is implemented.

In a fifth aspect, the present disclosure provides a computer program product, comprising computer program code, when the computer program code is executed on a computer, the computer implements the asynchronous deployment method for computation tasks of the hardware acceleration unit.

As described above, the asynchronous deployment method for computation tasks of a hardware acceleration unit, heterogeneous computing terminal, device, medium, and program product of the present disclosure have the following beneficial effects: by asynchronously deploying the computation tasks, the task deployment by the control unit and the task execution by the hardware acceleration unit can proceed independently without requiring mutual waiting. This improves the system's resource utilization, throughput, and computational efficiency, while also enhancing the utilization of the hardware acceleration unit. This method reduces system wait times, improves response speed and stability, and makes the system more applicable. As a result, the system is better equipped to meet the demands of various computational scenarios and task requirements.

### BRIEF DESCRIPTION OF THE DRAWINGS

FIG. 1 shows a schematic flow diagram of a synchronous deployment method for computation tasks of a hardware acceleration unit in the prior art.
FIG. 2 shows a schematic flow diagram of an asynchronous deployment method for computation tasks of a hardware acceleration unit according to an embodiment of the present disclosure.
FIG. 3 shows a schematic flow diagram of an asynchronous deployment method for computation tasks of a hardware acceleration unit according to another embodiment of the present disclosure.
FIG. 4 shows a schematic flow diagram of the asynchronous deployment method for computation tasks of a hardware acceleration unit when repeating execution of the same task according to an embodiment of the present disclosure.
FIG. 5 shows a schematic flow diagram of instructions of the asynchronous deployment method for computation tasks of a hardware acceleration unit according to an embodiment of the present disclosure.
FIG. 6 shows a schematic diagram of task execution time of the synchronous deployment method for computation tasks of a hardware acceleration unit in the prior art.
FIG. 7 shows a schematic diagram of task execution time of the asynchronous deployment method for computation tasks of a hardware acceleration unit according to an embodiment of the present disclosure.
FIG. 8 shows a schematic flow diagram of instructions of a multi-core hardware acceleration unit of an asynchronous deployment system for computation tasks of a hardware acceleration unit according to an embodiment of the present disclosure.
FIG. 9 shows a schematic structural diagram of an asynchronous deployment device for computation tasks of a hardware acceleration unit according to an embodiment of the present disclosure.

### DETAILED DESCRIPTION OF THE PREFERRED EMBODIMENTS

The following illustrates the embodiments of the present disclosure by specific examples, and other advantages and efficacies of the present disclosure can be readily appreciated by those skilled in the art from the contents in this specification. The present disclosure may also be implemented or applied in other different embodiments, and various details in this specification may be modified or changed arbitrarily based on different views and applications without departing from the spirit of the present disclosure. It is to be noted that the following embodiments and features in the embodiments may be combined with each other without conflict.

Before the present disclosure is described in further detail, the terms and terminology involved in the embodiments of the present disclosure are described as follows.
<1> Hardware Acceleration Unit: a hardware component specifically designed to perform certain types of computation tasks, achieving efficient acceleration through a specialized hardware architecture and instruction set. The hardware acceleration unit, when working in combination with a control unit such as CPU, realizes the construction of a heterogeneous computing platform, improving computational efficiency and performance. Common hardware acceleration units include a graphics processing unit (GPU) and a tensor processing unit (TPU).
<2> Control Unit: the control unit includes but is not limited to a central processing unit (CPU), a microcontroller unit (MCU), etc., and is responsible for coordinating and managing the various parts of a computer or device. It controls the operations of the hardware acceleration unit, ensuring that instructions are executed effectively, thereby optimizing system performance and response speed.
<3> Asynchronous Deployment: the task deployment by the control unit and the task execution by the hardware acceleration unit are asynchronous, meaning the control unit does not need to wait for the hardware acceleration unit to complete its current task to deploy the next task.
<4>Task Queue: a data structure used to store and manage to-be-executed tasks, typically determining the task execution order in a first-in-first-out (FIFO) manner.
<5>Computation Instruction: instructions used to control basic arithmetic operations performed by the processor, such as addition, subtraction, multiplication, and division.
<6>Task Completion Instruction: an instruction used by the hardware acceleration unit to notify the control unit, and typically issues an interrupt signal.
<7>Jump Instruction: an instruction used to alter the execution sequence of programs, directing the hardware acceleration unit to jump to a specified program address for execution.

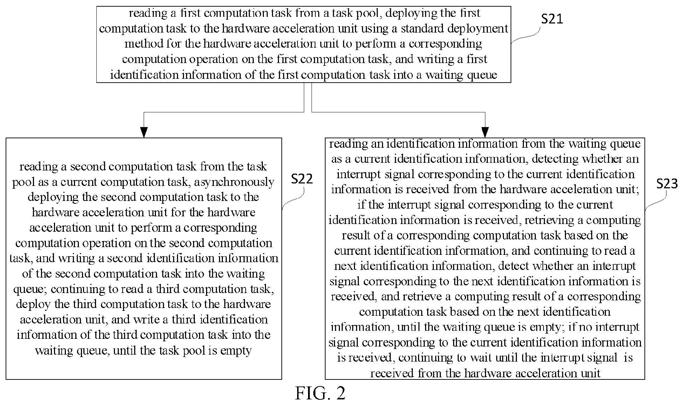

In order to facilitate the understanding of the embodiments of the present disclosure, details are described with reference to FIG. 2. FIG. 2 shows a schematic flow diagram of an asynchronous deployment method for computation tasks of a hardware acceleration unit according to an embodiment of the present disclosure. The asynchronous deployment method for computation tasks of a hardware acceleration unit comprises the following steps:
Step S21: reading a first computation task from a task pool and deploying the first computation task to a hardware acceleration unit using a standard deployment method for a corresponding computation operation by the hardware acceleration unit, writing a first identification information corresponding to the first computation task to a waiting queue, and then executing step S22 and step S23 in parallel.

In an embodiment of the present disclosure, the hardware acceleration unit is a dedicated hardware IP core designed to provide hardware acceleration for specific computation tasks, in order to enhance computational performance and energy efficiency. The hardware acceleration unit includes, but is not limited to, a neural network processing unit IP (NPU IP), a vision processing unit IP (VPU IP), an audio processing unit (APU IP), a cryptography engine unit IP (CEU IP), and an image/video decoder/encoder IP (VDEC/VENC IP). These dedicated computational IPs are similar to NPU processors in that they are both designed for hardware acceleration optimization in specific application scenarios. Compared to a general-purpose arithmetic logic unit IP (ALU IP) and a floating point unit IP (FPU IP), the hardware acceleration unit can significantly improve computational performance and energy efficiency when executing the relevant tasks.

In an embodiment of the present disclosure, the method further comprises: asynchronously deploying a second computation task to the hardware acceleration unit, and inserting a jump instruction at the end of an instruction of the first computation task, where a target address of the jump instruction is a starting address of the second computation task, so that after completing the first computation task, the hardware acceleration unit automatically jumps to and executes the second computation task.

In this embodiment, the control unit is a CPU processor controlling core computation tasks, while the hardware acceleration unit handles specific operations such as graphics rendering and machine learning. The CPU processor interacts with the hardware acceleration unit via a high-speed bus for low-latency and high-bandwidth data transfer. The CPU processor assigns complex tasks to the hardware acceleration unit, which processes them and then provides the results back to the CPU processor, completing the data processing and control logic.

It is to be noted that the deployment by the CPU processor and the execution by the hardware acceleration unit are asynchronous. During the deployment of the CPU processor, the instruction of the first computation task will be modified, and a jump instruction will be inserted at the end of the instruction of the first computation task, causing the hardware acceleration unit to jump to the starting address of the second computation task, completing the deployment of the CPU processor. The hardware acceleration unit parses the jump instruction and jumps to the second computation task to start execution when it reaches the end of the first computation task. In this process, the hardware acceleration unit reads instructions from memory and executes them without an involvement of the CPU processor. The instructions are stored in memory, including various types such as synchronization instructions, computation instructions, and termination instructions. During the deployment process, the CPU processor modifies certain instructions to ensure correct jumping between computation tasks. For example, an initial task may generate 1000 instructions, which include different types of instructions. The CPU processor modifies a portion of these instructions, such as adding jump instructions or termination instructions to achieve the aforementioned asynchronous deployment process.

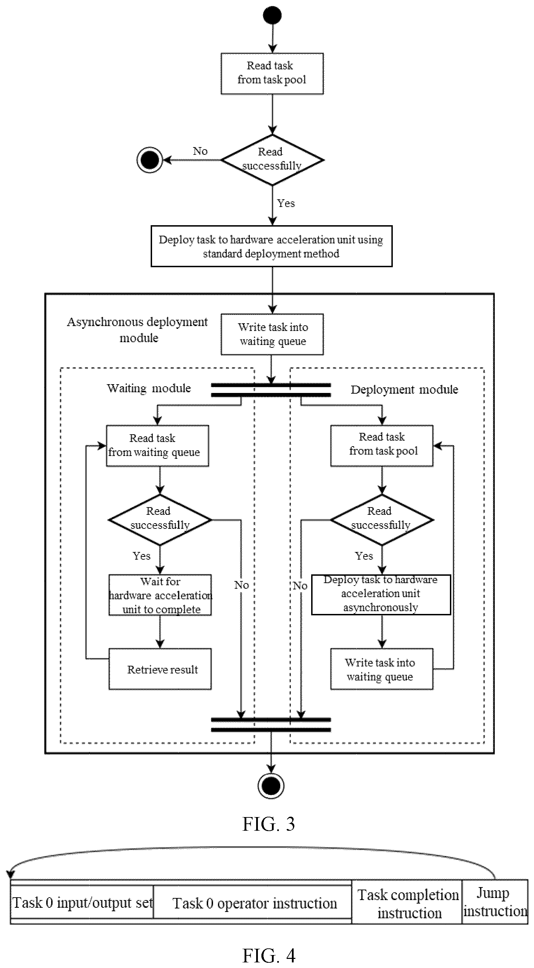

FIG. 3 shows a schematic flow diagram of an asynchronous deployment method for computation tasks of a hardware acceleration unit according to another embodiment of the present disclosure. In this embodiment, there are one or more computation tasks that require computation operations by the hardware acceleration unit in the task pool. The task with the highest priority is read from the task pool and is assigned as the first task for execution by the hardware acceleration unit. This first task is then deployed to the hardware acceleration unit using the standard deployment method, so that the hardware acceleration unit can perform the corresponding computation operations. At this point, the hardware acceleration unit is in a busy state. During the busy state of the hardware acceleration unit, other tasks can be asynchronously deployed to the hardware acceleration unit, however, the hardware acceleration unit cannot perform computation operations on these tasks. The present disclosure provides an asynchronous deployment module with a waiting module and a deployment module to perform asynchronous deployment on the hardware acceleration unit in the busy state, so as to improve the utilization of the hardware acceleration unit. In order to distinguish between deployments performed during the idle state and those performed during the busy state, the process of deploying the first task during the idle state is referred to as "standard deployment," while the process of deploying subsequent computation tasks during the busy state is referred to as "asynchronous deployment".

"Standard deployment" refers to a deployment method carried out sequentially, where each step must wait for its previous step to be completed for execution. For this traditional deployment method, the control unit and the hardware acceleration unit may wait for each other, i.e., the control unit has to wait for the hardware acceleration unit to finish processing after deploying a task to the hardware acceleration unit. This can lead to delays and inefficiencies in the deployment process. Therefore, compared to asynchronous deployment, the standard deployment may result in more waiting time and resource wastage.

In an embodiment of the present disclosure, the task content of each of the computation tasks includes: an operation type, operation data, and a control instruction. The control instruction includes: an operation execution instruction, a task completion instruction, and a jump instruction, wherein the operation execution instruction directs the hardware acceleration unit to perform the corresponding computation operation for the current computation task, the task completion instruction directs the hardware acceleration unit to send a completion signal for the current computation task to the control unit, and the jump instruction directs the hardware acceleration unit to immediately jump to the next deployed computation task after completing the current computation task.

In an embodiment of the present disclosure, the computation task refers to computation tasks with different operation data but the same computation type. Specifically, the hardware acceleration unit needs to perform multiple identical computation operations on large amounts of data in fields such as image processing, speech recognition, natural language processing, machine learning, deep learning, high-performance computing, cryptography, and scientific computing. To improve efficiency, the asynchronous deployment method for computation tasks of the hardware acceleration unit provided by the present disclosure allows the same computation operation to be executed on different data. Identical computation tasks for different data are named as a first task and a second task, respectively. When the control unit completes the deployment of the first task and detects that the hardware acceleration unit has finished executing the input/output related instructions of the first task, the control unit modifies the input/output related instructions of the first task in a preset manner to generate the second task. Subsequently, the control unit deploys the second task to the hardware acceleration unit to make the hardware acceleration unit perform the task twice consecutively, but using different inputs and outputs each time. As shown in FIG. 4, the control unit first deploys task 0 to the hardware acceleration unit. When the hardware acceleration unit completes the input/output instructions of task 0, the control unit modifies the input/output instructions of task 0. And once the hardware acceleration unit finishes this computation task, it jumps to the updated input/output instructions based on the jump instruction to read the new data. Then task 0 with the updated data is redeployed and recalculated, thus allowing the hardware acceleration unit to execute the same type of computation task twice consecutively, each time using different inputs and outputs.

Further, the process of asynchronously deploying computations for multiple different operation data with the same computation type includes: deploying the first computation task to the hardware acceleration unit using the standard deployment method to perform the corresponding computation operations; upon detecting that the hardware acceleration unit has completed executing the input/output related instructions of the first computation task, altering the input data of the first computation task and generating a second computation task, then deploying the second computation task to the hardware acceleration unit using the asynchronous deployment method to perform the corresponding computation operations; altering the input data of the second computation task to generate the third computation task and performing the corresponding computation operations on the third computation task, after detecting that the hardware acceleration unit has completed executing the input/output related instructions of the second computation task, until the preset termination condition is met.

In an embodiment, the preset termination condition comprises one or more of the following: terminating the computation after a preset number of input data alterations for the first computation task; terminating the computation when the total duration of the computation operation executed by the hardware acceleration unit reaches the preset duration; terminating the computation when the computation resources in the hardware acceleration unit fall below the preset standard. The computation resources in the hardware acceleration unit falling below the preset standard includes, but is not limited to, insufficient memory, excessive utilization of the hardware acceleration unit, etc. When it is detected that the preset termination condition is met, the last instruction in the current computation task is modified to a termination instruction to stop the computation.

In an embodiment, in an image classification task, the NPU processes a first image of a cat and classifies this image as "cat". Then, the control unit alters the input image address to direct the NPU to the address of a second image (e.g., a dog image), accomplishing the task deployment. The NPU will process the second image and classify this image as "dog". Through this preset input alteration method, the control unit can quickly generate new tasks and deploy them to the NPU to perform the same processing on different data.

Step S22: reading a second computation task from the task pool, asynchronously deploying the second computation task to the hardware acceleration unit for performing the corresponding computation operation, and writing a second identification information corresponding to the second computation task into the waiting queue; continuing to perform the operations of reading a third computation task, deploying the third computation task to the hardware acceleration unit, and writing the third identification information corresponding to the third computation task into the waiting queue, until the task pool is empty.

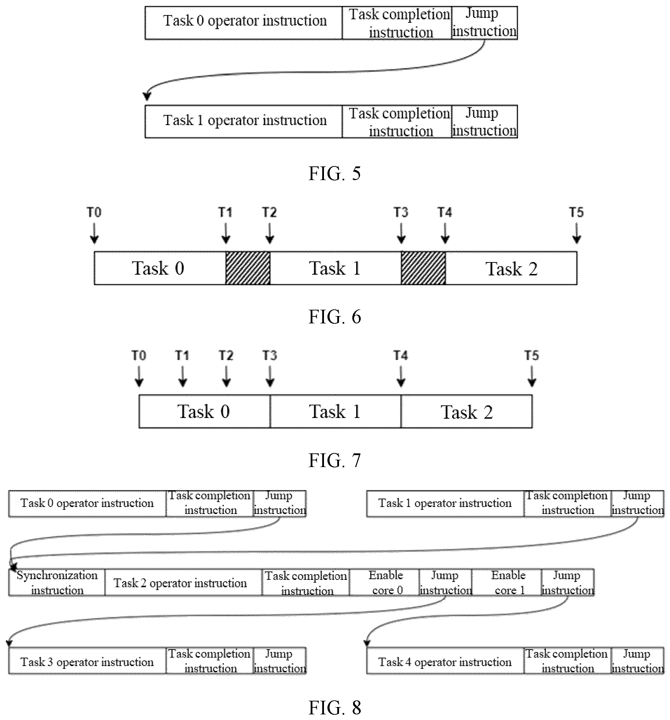

In an embodiment of the present disclosure, asynchronously deploying the second computation task to the hardware acceleration unit comprises: when the hardware acceleration unit is in a busy state, reading computation tasks from the task pool in order of priority, from high to low. Each computation task is deployed asynchronously to the hardware acceleration unit based on its' description information. The asynchronous deployment of computation tasks is shown in FIG. 5. Instruction set of each computation task contains three kinds of instructions including the operator instruction, the task completion instruction, and the jump instruction. In particular, for the last computation task in the waiting queue, its last instruction is a termination instruction. Each instruction directs the hardware acceleration unit to perform the corresponding operation.

In an embodiment, when the second computation task is the last in the waiting queue, the last instruction of the second task is the termination instruction.

It is worth stating that for each computation task in the present disclosure, a jump instruction is included at the end of the instruction set. After executing the operator instruction and the task completion instruction of the second computation task, the jump instruction is performed to allow the hardware acceleration unit to jump to a specific target address, thereby reaching the starting address of the third computation task to complete the transition between tasks. Specifically, after the hardware acceleration unit finishes the first computation task, it will immediately jump to the second computation task for execution. This allows for the jumping from the first computation task to the second computation task without the need for the control unit. The hardware acceleration unit can autonomously jump between computation tasks, ensuring that there is no idle time during task switching, thus significantly improving the utilization of the hardware acceleration unit.

Further, after deploying the second computation task, its corresponding identification information is written to the waiting queue. This queue is used to assist the control unit in detecting the deployment of the computation tasks and to retrieve the corresponding computation results of the completed tasks according to the order in the waiting queue. Repeating step S22 until both the waiting queue and the task pool are empty, meaning that all computation tasks have been deployed and finished for execution.

In an embodiment of the present disclosure, the identification information includes a memory address, and retrieving the corresponding computation results of the completed computation tasks based on the identification information includes: reading the computation results from the memory addresses in a shared memory space.

Further, the identification information includes both the memory address and a data tag. The memory address is used to determine the physical location of the data in memory, and the control unit can accurately locate and access specific data in memory by specifying memory address. The data tag is more commonly used to identify the type, attributes, task type, or other information of the data, helping the control unit to recognize and process the data in memory. When processing the computation results generated by the hardware acceleration unit, the data tag helps the control unit recognize the type and characteristics of the data, ensuring correct handling of the data.

It should be noted that the identification information also includes a task identifier. The task identifier is a unique identifier for the computation task, used to distinguish different tasks. For example, the task identifier may use a unique number or code. The task identifier is used for searching, tracking, managing, and assigning tasks, ensuring that tasks can be accurately located and identified.

Step S23: reading an identification information from the waiting queue as the current identification information; checking whether an interrupt signal corresponding to the current identification information, sent by the hardware acceleration unit, has been received; if the interrupt signal is received, retrieving the computation result of the corresponding computation task based on the current identification information, and continuing to perform the following operations: reading a next identification information, checking whether an interrupt signal corresponding to the next identification information has been received from the hardware acceleration unit, and retrieving the computation result of the corresponding computation task based on the next identification information, until the waiting queue is empty; if the interrupt signal is not received, continuing to wait until the interrupt signal corresponding to the current identification information, sent by the hardware acceleration unit, is received.

In an embodiment of the present disclosure, the control unit is configured to monitor and obtain the computation results of the completed deployed computation tasks. The specific process is as follows: the control unit acquires a result-reading task from the waiting queue and waits for the hardware acceleration unit to complete the computation task corresponding to the result-reading task. When the control unit receives the interrupt signal sent back by the hardware acceleration unit, the control unit executes the result-reading task, retrieves the corresponding computation result, and performs subsequent operations on the computation result. This process is repeated until the waiting queue is empty. The subsequent operations performed by the control unit include: storing results, data analysis, data conversion, data fusion, updating system status, triggering other tasks, sending messages, displaying results, providing user feedback, etc.

In an embodiment of the present disclosure, when the hardware acceleration unit completes a task, it sends an interrupt signal to the control unit. This interrupt signal includes the identification information of the completed task, such as the task identifier, memory address, data tag, etc., so that the control unit can use this information to retrieve the computation result generated by the hardware acceleration unit from memory. In this process, the computation result is stored in memory, rather than in the hardware acceleration unit or the control unit. After receiving the interrupt signal, the control unit locates the corresponding data in memory based on the identification information and performs subsequent processing or output operation. In this way, the control unit can quickly retrieve the computation result from the hardware acceleration unit and proceed with the next task, thereby improving the system's efficiency and response speed.

FIG. 6 shows a schematic diagram of task execution time in the prior art. Task 0 is submitted at time T0 and completed at time T1. During time T1 and time T2, the control unit detects that the hardware acceleration unit has finished executing the computation for Task 0, after which the control unit retrieves the result and proceeds with the subsequent process. Task 1 is then submitted at time T2 and completed at time T3. Task 2 is not submitted until time T4 and is completed at time T5. It can be clearly seen that there is idle time for the hardware acceleration unit between two tasks. FIG. 7 shows a schematic diagram of task execution time according to an embodiment of the present disclosure. As shown in FIG. 7, at time T0, Task 0 is submitted. During the execution of Task 0 by the hardware acceleration unit, Tasks 1 and 2 are deployed at time T1 and time T2, respectively, through an asynchronous deployment module. When Task 0 is completed at time T3, the hardware acceleration unit immediately and seamlessly begins executing Task 1, while the control unit can retrieve the result of Task 0 and proceed with subsequent processes. Subsequently, during the duration from time T3 to time T4, Task 3 and Task 4 (not shown in the figure) are also deployed. When Task 1 is completed at time T4, the hardware acceleration unit immediately and seamlessly begins executing Task 2, while the control unit can retrieve the result of Task 1 and proceed with subsequent processes. As can be seen, during the execution of Tasks 0, 1, and 2, there is no idle time for the hardware acceleration unit, which significantly improves its utilization. The description above only provides an embodiment of the present disclosure. In this embodiment, two tasks were deployed at time T1 and time T2, respectively. However, there are no limitations on the number of computation tasks that can be deployed between two adjacent time points, for example, multiple computation tasks can be deployed at any two adjacent time points, until the task pool is empty.

In the embodiments of the present disclosure, terms such as "first," "second," etc., are used to distinguish similar or identical items with essentially the same functions and roles. For example, "first task" and "second task" are merely used to illustrate different deployment methods and do not impose any limitations on their order. Those skilled in the art will understand that the terms "first," "second," and so on do not restrict the number or execution sequence, and do not necessarily imply distinct items.

It should be noted that in the embodiments of the present disclosure, terms such as "exemplary" or "for example" are used to provide examples, illustrations, or explanations. Any embodiment or design described as "exemplary" or "for example" in this application should not be interpreted as being more preferred or advantageous than other embodiments or designs. Specifically, the use of "exemplary" or "for example" aims to describe the relevant concepts in a concrete manner.

In embodiments of the present disclosure, "at least one" refers to one or more, and "multiple" refers to two or more. The term "and/or" describes the relationship between associated objects and indicates three possible relationships. For example, A and/or B can represent: A alone, A and B together, and B alone, where A and B can be either singular or plural. The character "/" generally indicates an "or" relationship between the objects. "At least one of the following" or similar expressions refer to any combination of the items listed, including a single one and any combination of the items. For example, "at least one of a, b, or c" could represent: a, b, c, a-b, a-c, b-c, or a-b-c, where a, b, and c can be either singular or plural.

According to the method provided by embodiments of the present disclosure, the present disclosure further provides a heterogeneous computing terminal, comprising a control unit and a hardware acceleration unit, wherein an interaction between the control unit and the hardware acceleration unit is as follows.

The control unit reads a first computation task from the task pool and deploys the first computation task to the hardware acceleration unit using a standard deployment method for the hardware acceleration unit to perform a corresponding computation operation, and then the control unit writes a first identification information corresponding to the first computation task into a waiting queue. Subsequently, the following operations are executed in parallel. The control unit reads a second computation task from the task pool as the current computation task and asynchronously deploys the second computation task to the hardware acceleration unit for the hardware acceleration unit to perform a corresponding computation operation on the second computation task. The control unit then writes a second identification information corresponding to the second computation task into the waiting queue. The control unit continues to read a third computation task and deploys the third computation task to the hardware acceleration unit, as well as writes a third identification information corresponding to the third computation task into the waiting queue, until the task pool is empty. The control unit reads an identification information from the waiting queue as the current identification information and detects whether an interrupt signal corresponding to the current identification information, sent by the hardware acceleration unit, has been received. If the control unit receives the interrupt signal, it retrieves the computation result of the computation task corresponding to the current identification information. The control unit continues to read a next identification information and detects whether an interrupt signal corresponding to the next identification information, sent by the hardware acceleration unit, has been received, if the control unit receives the interrupt signal, it retrieves the computation result of the computation task corresponding to the next identification information, until the waiting queue is empty. If the control unit does not receive the interrupt signal, it continues to wait until receiving the interrupt signal corresponding to the current identification information sent by the hardware acceleration unit.

In an embodiment of the present disclosure, the interaction between the control unit and the hardware acceleration unit further includes: after asynchronously deploying the second computation task to the hardware acceleration unit, inserting a jump instruction at the end of the first computation task's instruction. The target address pointed to by the jump instruction is the starting address of the second computation task, so that after the hardware acceleration unit completes the execution of the first computation task, it automatically jumps to the second computation task and executes it.

In an embodiment of the present disclosure, the task content of each computation task includes an operation type, operation data, and a control instruction. The control instruction includes an operation execution instruction, a task completion instruction, and a jump instruction. The operation execution instruction is used to instruct the hardware acceleration unit to perform a corresponding computation operation for the current computation task. The task completion instruction is used to instruct the hardware acceleration unit to send a signal to the control unit indicating that the current computation task has been completed. The jump instruction is used to instruct the hardware acceleration unit to directly jump to the next computation task, which has been asynchronously deployed, after completing the current computation task.

In an embodiment of the present disclosure, the hardware acceleration unit includes multiple cores. The process of asynchronously deploying the second computation task to the hardware acceleration unit for the hardware acceleration unit to perform the corresponding computation operation includes: determining whether one or more cores used for deploying the second computation task are in an idle state; if the one or more cores are all in an idle state, deploying the second computation task to the hardware acceleration unit using the standard deployment method; otherwise, asynchronously deploying the second computation task to the hardware acceleration unit.

FIG. 8 shows a schematic flow diagram of a multi-core hardware acceleration unit according to an embodiment of the present disclosure. In this embodiment, the hardware acceleration unit has two cores, with the first core executing Task 0 and the second core executing Task 1. Task 2 requires both cores to perform the computation operations. After completing Task 0, the first core immediately jumps to Task 2, and similarly, after completing Task 1, the second core also jumps to Task 2. If the computations of the first and second cores are not synchronized, whichever core finishes first will immediately jump to Task 2 and wait for the other core. Task 2 will only begin execution once both cores are ready. After Task 2 is completed, core 0 executes the jump instruction and switches to Task 3 for execution, followed by core 1 jumping to Task 4 for execution.

In an embodiment of the present disclosure, the computation task refers to computation tasks with different operation data but the same computation type.

For the sake of brevity, the specific processes of the control unit and the hardware acceleration unit in performing the corresponding steps in the system, which have been detailed in the method embodiments, will not be repeated here.

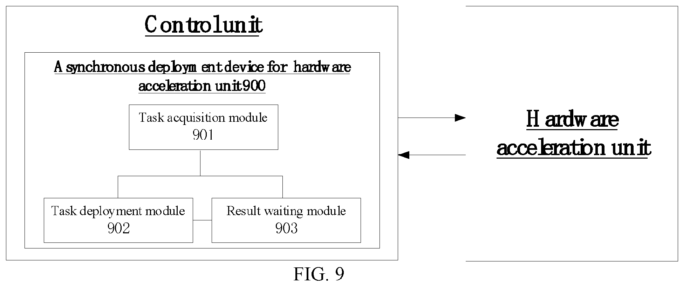

FIG. 9 shows a schematic structural diagram of an asynchronous deployment device 900 for computation tasks of a hardware acceleration unit according to an embodiment of the present disclosure. As shown in FIG. 9, the device includes a task acquisition module 901, a task deployment module 902, and a result waiting module 903.

The task acquisition module 901 reads a first computation task from a task pool, deploys the first computation task to the hardware acceleration unit using a standard deployment method for the hardware acceleration unit to perform a corresponding computation operation on the first computation task, and writes a first identification information corresponding to the first computation task into a waiting queue.

The task deployment module 902 reads a second computation task from the task pool as a current computation task, asynchronously deploys the second computation task to the hardware acceleration unit for execution of a corresponding computation operation, and writes a second identification information corresponding to the second computation task into the waiting queue. Then the task deployment module 902 continues performing the steps of reading a third computation task, deploying the third computation task to the hardware acceleration unit, and writing a third identification information corresponding to the third computation task into the waiting queue until the task pool is empty.

The result waiting module 903 reads an identification information from the waiting queue as a current identification information, and detects whether an interrupt signal corresponding to the current identification information has been received from the hardware acceleration unit. If the interrupt signal is received, the corresponding computational result of the task is acquired based on the current identification information, the result waiting module 903 continues to read a next identification information and detects whether an interrupt signal corresponding to the next identification information is received from the hardware acceleration unit, if the interrupt signal corresponding to the next identification information is received, the result waiting module 903 retrieves the corresponding computational result based on the next identification information, until the waiting queue is empty. If no interrupt signal is received, the result waiting module 903 continues to wait until the interrupt signal corresponding to the current identification information is received from the hardware acceleration unit.

For the sake of brevity, the specific processes of each module performing the corresponding steps, which have been detailed in the method embodiments above, will not be repeated here.

It should be understood that the division of modules in the embodiments of this application is illustrative, representing a logical function division. In actual implementation, alternative divisions may be used. Additionally, the functional modules in various embodiments of this application can be integrated into a single processor, exist physically as separate entities, or be integrated into a single module. The integrated modules can be implemented in hardware form or as software functional modules.

According to the method provided in embodiments of the present disclosure, the present disclosure further provides a computer program product comprising: computer program code, wherein when the computer program code is run on a computer, it causes the computer to perform the asynchronous deployment method for computation tasks of a hardware acceleration unit illustrated in any one embodiment of the present disclosure.

According to the method provided in embodiments of the present disclosure, the present disclosure further provides a computer-readable storage medium storing program code, wherein when the program code is run on a computer, it causes the computer to perform the asynchronous deployment method for computation tasks of a hardware acceleration unit illustrated in any one embodiment of the present disclosure.

The terms "component", "module", "system", etc. used in this specification are intended to refer to computer-related entities, hardware, firmware, combinations of hardware and software, software, or software in execution. For example, a component may be, but is not limited to, a process running on a processor, the processor itself, an object, an executable file, an execution thread, a program, and/or a computer. As illustrated, both the application running on a computing device and the computing device itself can be considered components. One or more components may reside in processes and/or execution threads, and the components may be arranged on a single computer and/or distributed across two or more computers. Additionally, these components can be executed based on various computer-readable media that store different data structures. For example, components may communicate through local and/or remote processes, based on signals containing one or more data packets (e.g., data from interactions between the local system, distributed systems, and/or other components via the internet, such as signals exchanged with other systems).

Those skilled in the art will recognize that the various illustrative logical blocks and steps described in the embodiments disclosed herein can be implemented using electronic hardware, or a combination of computer software and electronic hardware. Whether these functions are implemented in hardware or software depends on the specific application and design constraints of the technical solution. Professionals in the field may use different methods to implement the described functions for each specific application, but such implementations should not be considered beyond the scope of the present application.

Those skilled in the art will clearly understand that, for the sake of description and simplicity, the specific operational processes of the system, device, and units described above can be referenced to the corresponding processes in the previously mentioned method embodiments and will not be repeated here.

In the multiple embodiments provided in this application, it should be understood that the disclosed system, device, and method can be implemented in other ways. For example, the device embodiment described above is merely illustrative. The division of units is based on logical function. In actual implementation, different division methods may be used. For instance, multiple units or components may be combined or integrated into another system, or some features may be omitted or not executed. Additionally, the coupling or direct communication connections shown or discussed between the components may be through some interfaces, devices, or indirect coupling or communication connections, which can be electrical, mechanical, or in other forms.

The units described as separate components may or may not be physically separated. The components shown as units may or may not be physical units; they can be located in one place or distributed across multiple network units. Depending on actual needs, some or all of the units can be selected to achieve the objectives of the embodiment of this application.

Additionally, in the embodiments of this application, the functional units can be integrated into a single processing unit, or each unit can exist physically separately, or two or more units can be integrated into a single unit.

In the above embodiments, the functions of each functional unit can be implemented fully or partially through software, hardware, firmware, or any combination thereof. When implemented using software, it can be realized fully or partially as a computer program product. A computer program product includes one or more computer instructions (programs). When computer program instructions (programs) are loaded and executed on a computer, they achieve, fully or partially, the processes or functions described in the embodiments of this application. The computer may be a general-purpose computer, a specialized computer, a computer network, or other programmable devices. The computer instructions may be stored on a computer-readable storage medium or transmitted from one computer-readable storage medium to another. For example, computer instructions may be transmitted from one website, computer, server, or data center to another website, computer, server, or data center via wired means (e.g., coaxial cable, optical fiber, digital subscriber line (DSL)) or wireless means (e.g., infrared, radio frequency, microwave, etc.). A computer-readable storage medium may be any available medium accessible by a computer or a data storage device such as a server or data center containing one or more integrated available media. Available media may include magnetic media (e.g., floppy disks, hard drives, magnetic tapes), optical media (e.g., digital video discs (DVDs)), and semiconductor media (e.g., solid state disks (SSDs)).

When the function is implemented in the form of a software functional unit and sold or used as an independent product, it can be stored on a computer-readable storage medium. Based on this understanding, the technical solution of this application, or more specifically, the part of this solution that contributes to the prior art, can be implemented as a software product. This computer software product is stored on a storage medium and includes several instructions that enable a computer device (which may be a personal computer, server, network device, etc.) to execute all or part of the steps of the methods in various embodiments of this application. The aforementioned storage medium includes various types of media that can store program code, such as USB drives, external hard drives, read-only memory (ROM), random access memory (RAM), floppy disks, optical disks, etc.

The above described are merely specific embodiments of this application, however, the scope of protection of this application is not limited to these embodiments. Any changes or substitutions that a person skilled in the art, within the technical scope disclosed in this application, could easily conceive of should still be covered by the protection scope of this application. Therefore, the protection scope of this application should be determined by the scope of the claims.

In summary, this application provides an asynchronous deployment method for computation tasks of a hardware acceleration unit, heterogeneous computing terminal, device, medium, and program product. The present disclosure offers a neural network based-asynchronous deployment method that improves the utilization of the hardware acceleration unit. By asynchronously deploying computation tasks to the hardware acceleration unit, the task deployment of the control unit and the task execution of the hardware acceleration unit can proceed in parallel, avoiding the need for mutual waiting, and thereby improving the system's resource utilization, throughput, and computational efficiency. In addition, the hardware acceleration unit can automatically jump to the next computation task, further improving the utilization of the hardware acceleration unit. This method not only reduces the system's waiting time but also shortens the system's response time, enhances stability, and improves adaptability, better meeting the needs of various computing scenarios and task requirements. Therefore, this application effectively overcomes the shortcomings of the prior art and has high industrial utilization value.

The above embodiments are only illustrative of the principles and efficacy of the present disclosure and are not intended to limit the present disclosure. Any person skilled in the art may modify or change the above embodiments without violating the spirit and scope of this application. Therefore, all equivalent modifications or alterations accomplished by persons having ordinary knowledge of the art without departing from the spirit and technical ideas disclosed in this application shall still be covered by the claims of this application.

## Claims

1. An asynchronous deployment method for computation tasks of a hardware acceleration unit, **characterized in that**, the asynchronous deployment method is applied to a control unit, and the method comprises:
reading a first computation task from a task pool, deploying the first computation task to the hardware acceleration unit using a standard deployment method for the hardware acceleration unit to perform a corresponding computation operation on the first computation task, and writing a first identification information of the first computation task into a waiting queue; then concurrently executing the following:
reading a second computation task from the task pool as a current computation task, asynchronously deploying the second computation task to the hardware acceleration unit for the hardware acceleration unit to perform a corresponding computation operation on the second computation task, and writing a second identification information of the second computation task into the waiting queue; continuing to read a third computation task, deploy the third computation task to the hardware acceleration unit, and write a third identification information of the third computation task into the waiting queue, until the task pool is empty;
reading an identification information from the waiting queue as a current identification information, detecting whether an interrupt signal corresponding to the current identification information is received from the hardware acceleration unit;
if the interrupt signal corresponding to the current identification information is received, retrieving a computing result of a corresponding computation task based on the current identification information, and continuing to read a next identification information, detect whether an interrupt signal corresponding to the next identification information is received, and retrieve a computing result of a corresponding computation task based on the next identification information, until the waiting queue is empty;
if no interrupt signal is received, continuing to wait until the interrupt signal corresponding to the current identification information is received from the hardware acceleration unit.

2. The method according to claim 1, further comprising:
after asynchronously deploying the second computation task to the hardware acceleration unit, inserting a jump instruction at the end of an instruction of the first computation task, wherein a target address of the jump instruction is a starting address of the second computation task, so that after the hardware acceleration unit completes the first computation task, the hardware acceleration unit automatically jumps to and executes the second computation task.

3. The method according to claim 1, wherein each computation task comprises: an operation type, operation data, and a control instruction;
wherein the control instruction comprises:
an operation execution instruction, which instructs the hardware acceleration unit to perform a corresponding computation operation for a current computation task;
a task completion instruction, which instructs the hardware acceleration unit to send a task completion signal to the control unit indicating that the current computation task has been completed;
and a jump instruction, which instructs the hardware acceleration unit, after completing the current computation task, to jump directly to and execute a next computation task that has been asynchronously deployed.

4. The method according to claim 1, wherein the hardware acceleration unit comprises multiple cores, and asynchronously deploying the second computation task to the hardware acceleration unit for the hardware acceleration unit to perform a corresponding computation operation on the second computation task comprises:
determining whether one or more cores used for deploying the second computation task are idle by the control unit;
if all of the cores are idle, the control unit deploys the second computation task to the hardware acceleration unit using the standard deployment method;
otherwise, the control unit asynchronously deploys the second computation task to the hardware acceleration unit.

5. The method according to claim 1, wherein the computation task refers to computation tasks with different computation data but the same computation type.

6. The method according to claim 5, asynchronously deploying multiple computation tasks with different computation data but the same computation type comprises:
deploying the first computation task to the hardware acceleration unit using the standard deployment method to perform the corresponding computation operation;
after detecting that the hardware acceleration unit has completed the execution of an input/output related instruction of the first computation task, altering an input data of the first computation task, and generating the second computation task, which is then asynchronously deployed to the hardware acceleration unit for performing the corresponding computation operation;
continuing to alter an input data of the second computation task, and perform the corresponding computation operation until a preset termination condition is met, after detecting that the hardware acceleration unit has completed the execution of an input/output related instruction of the second computation task.

7. The method according to claim 6, wherein the preset termination condition comprises one or more of the following:
terminating the operation after a preset number of input data alterations for the first computation task;
terminating the operation when a total duration of the computation operation executed by the hardware acceleration unit reaches a preset duration;
terminating the operation when computation resources of the hardware acceleration unit fall below a preset standard.

8. The method according to claim 3, wherein when the second computation task is the last in the waiting queue, a last instruction of the second computation task is a termination instruction.

9. The method according to claim 1, wherein the identification information comprises a memory address, and retrieving the computation result of the corresponding computation task based on the current identification information comprises:
reading the computation result from a current memory address in a memory.

10. A heterogeneous computing terminal, comprising a control unit and a hardware acceleration unit, wherein the control unit and the hardware acceleration unit have the following interaction process:
the control unit reads a first computation task from a task pool, deploys the first computation task to the hardware acceleration unit using a standard deployment method for the hardware acceleration unit to perform a corresponding computation operation on the first computation task, and writes a first identification information of the first computation task into a waiting queue; then, the following are executed concurrently:
the control unit reads a second computation task from the task pool as a current computation task, asynchronously deploys the second computation task to the hardware acceleration unit for the hardware acceleration unit to perform a corresponding computation operation on the second computation task, and writes a second identification information of the second computation task into the waiting queue;
the control unit continues to read a third computation task, deploys the third computation task to the hardware acceleration unit, and writes a third identification information of the third computation task into the waiting queue, until the task pool is empty;
the control unit reads an identification information from the waiting queue as a current identification information, detects whether an interrupt signal corresponding to the current identification information is received from the hardware acceleration unit;
if the control unit receives the interrupt signal, the control unit retrieves a computation result corresponding to a computation task based on the current identification information, and continues to read a next identification information, detect whether an interrupt signal corresponding to the next identification information is received, and retrieve a computation result of a corresponding computation task based on the next identification information, until the waiting queue is empty;
if the control unit does not receive the interrupt signal corresponding to the current identification information, the control unit continues to wait until the interrupt signal corresponding to the current identification information is received from the hardware acceleration unit.

11. The heterogeneous computing terminal according to claim 10, wherein the interaction process further comprises:
after the control unit asynchronously deploys the second computation task to the hardware acceleration unit, inserting a jump instruction at the end of an instruction of the first computation task, wherein a target address of the jump instruction is a starting address of the second computation task, so that after the hardware acceleration unit completes the first computation task, the hardware acceleration unit automatically jumps to and executes the second computation task.

12. The heterogeneous computing terminal according to claim 10, wherein each computation task comprises: an operation type, operation data, and a control instruction;
wherein the control instruction comprises:
an operation execution instruction, which instructs the hardware acceleration unit to perform a corresponding computation operation for a current computation task;
a task completion instruction, which instructs the hardware acceleration unit to send a task completion signal to the control unit indicating that the current computation task has been completed;
and a jump instruction, which instructs the hardware acceleration unit, after completing the current computation task, to jump directly to and execute a next computation task that has been asynchronously deployed.

13. The heterogeneous computing terminal according to claim 10, wherein the hardware acceleration unit comprises multiple cores, and the control unit asynchronously deploys the second computation task to the hardware acceleration unit for the hardware acceleration unit to perform a corresponding computation operation on the second computation task comprises:
determining whether one or more cores used for deploying the second computation task are idle by the control unit;
if all of the cores are idle, the control unit deploys the second computation task to the hardware acceleration unit using the standard deployment method;
otherwise, the control unit asynchronously deploys the second computation task to the hardware acceleration unit.

14. The heterogeneous computing terminal according to claim 10, wherein the computation task refers to computation tasks with different computation data but the same computation type.

15. The heterogeneous computing terminal according to claim 14, wherein asynchronously deploying multiple computation tasks with different computation data but the same computation type comprises:
deploying the first computation task to the hardware acceleration unit using the standard deployment method to perform the corresponding computation operation;
after detecting that the hardware acceleration unit has completed the execution of an input/output related instruction of the first computation task, altering an input data of the first computation task, and generating the second computation task, which is then asynchronously deployed to the hardware acceleration unit for performing the corresponding computation operation;
continuing to alter an input data of the second computation task, and perform the corresponding computation operation until a preset termination condition is met, after detecting that the hardware acceleration unit has completed the execution of an input/output related instruction of the second computation task.

16. The heterogeneous computing terminal according to claim 15, the preset termination condition comprises one or more of the following:
terminating the operation after a preset number of input data alterations for the first computation task;
terminating the operation when a total duration of the computation operation executed by the hardware acceleration unit reaches a preset duration;
terminating the operation when computation resources of the hardware acceleration unit fall below a preset standard.

17. The heterogeneous computing terminal according to claim 12, wherein when the second computation task is the last in the waiting queue, a last instruction of the second computation task is a termination instruction.

18. The heterogeneous computing terminal according to claim 10, wherein the identification information comprises a memory address, and the control unit retrieving the computation result of the corresponding computation task based on the current identification information comprises:
reading the computation result from a current memory address in a memory.

19. An asynchronous deployment device for computation tasks of a hardware acceleration unit, comprising:
a task acquisition module: for reading a first computation task from a task pool and deploying the first computation task to the hardware acceleration unit using a standard deployment method for the hardware acceleration unit to perform a corresponding computation operation on the first computation task and write a first identification information of the first computation task into a waiting queue;
a task deployment module: for reading a second computation task from the task pool as a current computing task, asynchronously deploying the second computation task to the hardware acceleration unit for the hardware acceleration unit to perform a corresponding computation operation on the second computation task, and writing a second identification information of the second computation task into the waiting queue; continuing to read a third computation task, deploy the third computation task to the hardware acceleration unit, and write a third identification information of the third computation task into the waiting queue until the task pool is empty;
and a result waiting module: for reading an identification information from the waiting queue as a current identification information, detecting whether an interrupt signal corresponding to the current identification information is received from the hardware acceleration unit; if the interrupt signal corresponding to the current identification information is received, retrieving a computation result of a corresponding computation task based on the current identification information, and continuing to read a next identification information, detect whether an interrupt signal corresponding to the next identification information is received from the hardware acceleration unit, and retrieve a computation result of a corresponding computation task based on the next identification information, until the waiting queue is empty; if the interrupt signal corresponding to the current identification information is not received, continuing to wait until the interrupt signal corresponding to the current identification information is received from the hardware acceleration unit.

20. A computer-readable storage medium, wherein the computer-readable storage medium stores a computer program, and when the computer program is executed by a processor, the asynchronous deployment method for computation tasks of the hardware acceleration unit of any one of claims 1 to 9 is implemented.

21. A computer program product, comprising computer program code, when the computer program code is executed on a computer, the computer implements the asynchronous deployment method for computation tasks of the hardware acceleration unit of any one of claims 1 to 9.
